(19) Europäisches Patentamt
European Patent Office
Office européen des brevets

(11) EP 1 970 989 B1

(12) **EUROPEAN PATENT SPECIFICATION**

(45) Date of publication and mention of the grant of the patent:
**18.11.2009 Bulletin 2009/47**

(51) Int Cl.:
***H01M 10/36*** *(2006.01)* *H01M 10/40* *(2006.01)*

(21) Application number: **08100587.8**

(22) Date of filing: **17.01.2008**

(54) **Electrolyte for lithium ion rechargeable battery and lithium ion rechargeable battery including the same**

Elektrolyt für eine wiederaufladbare Lithium-Ionen-Batterie und wiederaufladbare Lithium-Ionen-Batterie damit

Électrolyte pour batterie au lithium-ion rechargeable et batterie au lithium-ion rechargeable incluant ledit électrolyte

(84) Designated Contracting States:
**DE FR GB**

(30) Priority: **12.03.2007 KR 20070023997**

(43) Date of publication of application:
**17.09.2008 Bulletin 2008/38**

(73) Proprietor: **Samsung SDI Co., Ltd.**
**Suwon-si**
**Gyeonggi-do (KR)**

(72) Inventors:
- **Kim Jinsung**
  **Gyeonggi-do (KR)**
- **Lee Hayoung**
  **Gyeonggi-do (KR)**
- **Kim Jinbum**
  **Gyeonggi-do (KR)**
- **Kim Yongshik**
  **Gyeonggi-do (KR)**
- **Park Narae**
  **Gyeonggi-do (KR)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(56) References cited:
**JP-A- 2007 019 012**
**US-A1- 2005 214 646**
**US-A1- 2006 228 626**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 970 989 B1

## Description

The present invention relates to an electrolyte for a lithium rechargeable battery and the lithium rechargeable battery comprising the same, more particularly, to an electrolyte for the lithium rechargeable battery including non-aqueous organic solvent, lithium salts, halogenated ethylene carbonate and vinylethylene carbonate, and the lithium rechargeable battery comprising the same.

## Description of the Related Art

A battery is a device that converts chemical energy generated by an electrochemical oxidation/reduction of chemical materials to electrical energy. According to the characteristics in use, the battery can be divided into a primary battery in which the electrochemical reaction of interest is not reversible, so used in disposable batteries, and a secondary battery which is a rechargeable battery in which the electrochemical reaction that releases energy is readily reversible.

Conventionally, the miniaturized and slimmed lithium rechargeable battery used for a cellular phone, an electronic scheduler, a wrist watch, etc. includes a mixture of oxides of lithium metal as a cathode active material, a carbon material or a lithium metal as an anode active material, and an electrolyte in which a proper amount of lithium salts is dissolved in an organic solvent.

More particularly, a typical electrolyte presently used includes a mixture of cyclic ester carbonate such as polyethylene carbonate and ethylene carbonate, etc., and chain ester carbonate such as dimethyl carbonate, methylethyl carbonate, diethyl carbonate, etc., and $LiPF_6$ dissolved in the mixture.

Newly developed electrolyte materials are just only two types, namely methylethyl carbonate (MEC) used from 1993 and methyl propionate which was used since the lithium rechargeable battery is commercialized.

However, demands about battery performance improvement, especially, excellent charging and discharging performance have been recently increased, so a technology to add specific compounds to the electrolyte has been developed to achieve it.

However, in case of adding specific compounds to the electrolyte to improve battery performance, there were problems that some items of battery performance can be improved, but the other items of battery performance may get worse. For example, if the additives are added to the electrolyte, there was a problem that low temperature performance is improved, but the performance of charging and discharging cycle is reduced.

## SUMMARY OF THE INVENTION

An embodiment of the present invention is to provide an improved electrolyte for a lithium rechargeable battery.

According to one aspect of the invention, there is provided an electrolyte for a lithium rechargeable battery, which comprises a non-aqueous organic solvent. The inventive electrolyte is characterized in that is further includes

(i) an non-aqueous organic solvent;

(ii) a lithium salt;

(iii) a halogenated ethylene carbonate in the ranges of 0.1 to 10 weight % based on the total amount of the electrolyte; and

(iv) vinylethylene carbonate in the ranges of 0.1 to 3 weight % based on the total amount of the electrolyte.

Preferably, the halogenated ethylene carbonate is a fluoroethylene carbonate, in particular 4-fluoroethylene carbonate (4-fluoro-1,3-dioxolan-2-one).

The amount of halogenated ethylene carbonate preferably may be in the ranges of 2 to 6 weight % based on the total amount of the electrolyte. The amount of vinylethylene carbonate may be in the ranges of 1 to 3 weight % based on the total amount of the electrolyte.

The non-aqueous organic solvent may be selected from the group consisting of carbonates except halogenated ethylene carbonate and vinylethylene carbonate, esters, ethers, ketones or mixtures thereof. In particular, the non-aqueous organic solvent may be a carbonate or a mixture of carbonates selected from the group consisting of dimethyl carbonate, diethyl carbonate, dipropyl carbonate, methylpropyl carbonate, ethylmethyl carbonate, ethylpropyl carbonate, ethylene carbonate, propylene carbonate, 1,2-butylene carbonate, 2,3-butylene carbonate, 1,2-pentylene carbonate and 2,3-pentylene carbonate.

The lithium salt may be selected from the group consisting of $LiPF_6$, $LiBF_4$, $LiSbF_6$, $LiAsF_6$, $LiClO_4$, $LiCF_3SO_3$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $LiAlO_4$, $LiAlCl_4$, LiCl and LiI.

Preferably, the amount of the halogenated ethylene carbonate is 5 weight % based on the total amount of the electrolyte, and the amount of the vinylethylene carbonate is 1 weight % based on the total amount of the electrolyte.
According to another aspect of the present invention, a lithium rechargeable battery includes an anode including an anode active material that can intercalate and deintercalate Li ions reversibly, a cathode including a cathode active material that can intercalate and deintercalate Li ions reversibly, the above-mentioned electrolyte, and a sealed case having the electrolyte, the anode and the cathode.
The lithium rechargeable battery including the electrolyte can maintain characteristics of the lithium rechargeable battery when it is stored at a high temperature and discharged at a low temperature, while maintaining cycle life of a high capacity lithium rechargeable battery.

## BRIEF DESCRIPTION OF THE DRAWING

A more complete appreciation of the invention, and many of the attendant advantages thereof, will be readily apparent as the same becomes better understood by reference to the following detailed description when considered in conjunction with the accompanying drawing, wherein:
The only figure is a graph illustrating the variation of the battery capacity according to the increase of charging/discharging cycle of a lithium rechargeable battery using an electrolyte according to an embodiment of the present invention.

## DETAILED DESCRIPTION OF EXEMPLARY EMBODIMENTS

According to the present invention, an electrolyte for a lithium ion rechargeable battery includes a non-aqueous organic solvent, lithium salts, halogenated ethylene carbonate, and vinylethylene carbonate.
The non-aqueous organic solvent may be selected from the group consisting of carbonates except halogenated ethylene carbonate and vinylethylene carbonate, esters, ethers, ketones or mixtures thereof.
Regarding the carbonate, it is preferred to use a mixture of cyclic carbonates and chain carbonates. It is preferable to use the cyclic carbonates and the chain carbonates by mixing with a volume ratio of 1:1 to 1:9, more preferably, 1:1.5 to 1:4 to achieve a better performance.
Preferred examples of the cyclic carbonates include ethylene carbonate (EC), propylene carbonate (PC), 1,2-butylene carbonate, 2,3-butylene carbonate, 1,2-pentylene carbonate, and 2,3-pentylene carbonate, etc. Ethylene carbonate may be used after mixing with other solvents because of its high melting point. In case where graphite is used as an anode active material, propylene carbonate may not be used or a reduced amount of propylene carbonate should be used because of its low decomposition voltage.
Preferred examples of the chain carbonates include dimethyl carbonate (DMC), diethyl carbonate (DEC), dipropyl carbonate (DPC), methylpropyl carbonate (MPC), ethylmethyl carbonate (EMC) and ethylpropyl carbonate (EPC). Among them, dimethyl carbonate, ethylmethyl carbonate, and diethylmethyl carbonate having a low viscosity are mainly used.
The electrolyte may further include aromatic hydrocarbons. Examples of aromatic hydrocarbons include compounds represented by Formula 3:

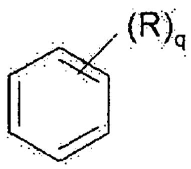

(3)

where R is halogen or alkyl having a carbon number of 1 to 10, and q is an integral of 0 to 6.
Examples of aromatic hydrocarbons include benzene, fluorobenzene, bromobenzene, chlorobenzene, toluene, xylene, and mesitylene, or mixtures thereof. When the volume ratio of the carbonate to the aromatic hydrocarbon organic solvent is in the ranges of 1:1 to 1:30 in an electrolyte, it has more superior properties such as stability, safety and ionic conductivity.
Examples of the ester for the non-aqueous organic solvent include methyl acetate, ethyl acetate, propyl acetate, methyl propionate, ethyl propionate, γ-butyrolactone(GBL), γ-valerolactone, γ-caprolactone, δ-valerolactone and ε-caprolactone.
Examples of the ether for the non-aqueous organic solvent include tetrahydrofuran, 2-methyltetrahydrofuran

and dibutyl ether.

Examples of the ketone for the non-aqueous organic solvent include polymethylvinyl ketone.

The lithium salts contained in the electrolyte act as a source of supplying lithium ions to the battery, and enable the lithium battery operation. The non-aqueous organic solvent functions as a medium that transfers $Li^+$ ions engaged in the electrochemical reaction of the battery.

Examples of the lithium salts include at least one selected from the group consisting of $LiPF_6$, $LiBF_4$, $LiSbF_6$, $LiAsF_6$, $LiClO_4$, $LiCF_3SO_3$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $LiAlO_4$, $LiAlCl_4$, LiCl and LiI. The concentration of lithium salts may be preferably in the ranges of 0.6 to 2.0M, more preferably, 0.7 to 1.6M. If the concentration of lithium salts is less than 0.6M, the electrolyte performance is degraded because the electrolyte conductivity is decreased. If the concentration of lithium salts is more than 2.0M, there is a problem that the migration of Li ions is decreased because the electrolyte viscosity is increased.

According to an embodiment of the present invention, the lithium rechargeable battery includes an anode, a cathode, and the electrolyte.

The cathode includes a cathode active material that can intercalate and deintercalate lithium ions. The cathode active material may be metal oxide, for example, a composite oxide of lithium and at least one metal selected from cobalt, manganese, and nickel.

The ratio of metals may be varied, and any element selected from the group of Mg, Al, Co, K, Na, Ca, Si, Ti, Sn, V, Ge, Ga, B, As, Zr, Mn, Cr, Fe, Sr, V and rare earth elements may be further included.

The cathode includes a cathode active material that can intercalate and deintercalate lithium ions. Examples of the cathode active material include carbon material such as crystalline carbon, noncrystalline carbon, carbon composite, carbon fiber, lithium metal, and alloy of lithium and other metal, etc. Examples of the noncrystalline carbon include hard carbon, cokes, mesocarbon microbead (MCMB) fired below 1500°C, mesophase pitch-based carbon fiber (MPCF), etc. Examples of the crystalline carbon include graphite materials, more particularly, natural graphite, graphitized cokes, graphitized MCMB, and graphitized MPMF, etc. The carbon materials may have an interplanar distance of 3.35-3.38A and a crystallite size (Lc) of more than 20nm by X-ray diffraction. Examples of the alloy of lithium and other metal include the alloy of lithium and aluminum, zinc, bismuth, cadmium, antimony, silicon, lead, tin, gallium or indium.

The anode and the cathode may be made by dispersing an electrode active material (i.e., an anode active material and a cathode active material, respectively), a binder, a conductive material, and a thickener if necessary, in a solvent so as to prepare electrode slurry compositions, and coating the slurry compositions each on an anode collector and a cathode collector. For example, aluminum or aluminum alloy may be used as the cathode collector, and copper or copper alloy may be used as the anode collector. The anode collector and the cathode collector may have a shape of a foil and a mesh.

The binder is a substance to function pasting of an active material, mutual adhesion of active materials, adhesion with the collector, and buffering effect for the shrinkage and swelling of the active material, etc. For example, a binder includes polyvinylidene fluoride(PVdF), copolymer(P(VdF/HFP)) of polyhexafluoropropylene-polyvinylidene fluoride, poly(vinyl acetate), polyvinyl alcohol, polyethylene oxide, polyvinylpyrrolidone, alkylated polyethylene oxide, polyvinyl ether, poly(methylmetacrylate), poly(ethylacrylate), polytetrafluoroethylene, polyvinylchloride, polyacrylonitrile, polyvinylpyridine, styrene-butadiene rubber, acrylonitrile-butadiene rubber, etc. The binder content is in the ranges of 0.1 to 30 weight %, preferably, 1 to 10 weight % based on the total amount of the electrode active material. If the binder content is less than 0.1 weight %, adhesive strength between the electrode active material and the collector is not sufficient. If the binder content is greater than 30 weight %, adhesive strength gets better, but it is unfavorable to make the battery having a high capacity because the content of the electrode active material is reduced to that extent.

A conductive material is a substance improving conductivity of electrons. At least one selected from the group consisted of graphite, carbon black, metal or metal compounds may be used as the conductive material. Examples of the graphite include artificial graphite and natural graphite, etc. Examples of the carbon black include acetylene black, ketjen black, denka black, thermal black, and channel black, etc. Examples of the metal or metal compounds include tin, tin oxides, tin phosphate($SnPO_4$), titanium oxide, potassium titanate and perovskite material such as $LaSrCoO_3$ and $LaSrMnO_3$, etc.

It is preferable that the conductive material content is in the ranges of 0.1 to 10 weight % based on the total amount of the electrode active material. If the conductive material content is less than 0.1 weight %, an electrochemical property is degraded, and if the conductive material content is more than 10 weight %, an energy density per weight is reduced.

The type of a thickener is not specially limited if it can control the slurry viscosity of an active material. For example, carboxymethyl cellulose, hydroxymethyl cellulose, hydroxyethyl cellulose, hydroxypropyl cellulose, etc. may be used as the thickener.

Non-aqueous solvent or aqueous solvent is used as a dispersing solvent of an electrode active material, a binder and a conductive material, etc. Non-aqueous solvent includes N-methyl-2-pyrrolidone (NMP), dimethylformamide, dimethylacetamide, N, N-dimethylaminopropylamine, ethylene oxide, tetrahydrofuran, etc.

The lithium rechargeable battery may include a separator preventing a short circuit between the anode and the cathode, and providing a migration passage of Li ions. Macromolecule membrane of polyolefin group such as polypropylene, polyethylene, polyethylene/polypropylene, polyethylene/polypropylene/polyethylene, polypropylene/polyethylene/polypropylene, etc. or their multi-layered membrane, microporous film, woven fabric or non-woven fabric may be used as the separator. A film coated on the porous polyolefin film by a polymer having superior stability may be used.

As illustrated in the examples below, the inventive electrolyte includes

(i) an non-aqueous organic solvent;

(ii) a lithium salt;

(iii) a halogenated ethylene carbonate in the ranges of 0.1 to 10 weight % based on the total amount of the electrolyte; and

(iv) vinylethylene carbonate in the ranges of 0.1 to 3 weight % based on the total amount of the electrolyte

for optimizing the cycle characteristics, discharge properties at low temperature and storage properties at high temperature.

The halogenated ethylene carbonate may be 4-fluoroethylene carbonate.

EXAMPLE 1

The cathode slurry was prepared by mixing $LiCoO_2$ as a cathode active material, polyvinylidene fluoride (PVdF) as a binder, and carbon as a conductive material with a ratio of 92: 4: 4 weight %, then dispersing it in N-methyl-2-pyrrolidone (NMP). The cathode was made by drying and rolling it after coating the slurry on a aluminum foil of 20 $\mu$m thickness. The anode slurry was prepared by mixing artificial graphite as an anode active material, styrene-butadiene rubber as a binder, and carboxymethylcelluose as a thickener with a ratio of 96: 2: 2 weight %, then dispersing it in the water. The anode was made by drying and rolling it after coating the slurry on a copper foil of 15 $\mu$m thickness. After inserting a film separator made of polyethylene of 20 $\mu$m thickness into the electrodes, it was wound, pressurized, and inserted into a can of angular type. A lithium rechargeable battery was made by inserting an electrolyte into the angular type can. The electrolyte was prepared by adding 3 weight % of 4-fluoroethylene carbonate and 0.5 weight % of vinylethylene carbonate, each based on the total amount of the electrolyte, to the non-aqueous organic solvent of ethylene carbonate:ethylmethyl carbonate:diethyl carbonate with a ratio of 1:1:1.

EXAMPLE 2

This example was carried out by the same method as the example 1 except adding 1 weight % of vinylethylene carbonate and 3 weight % of 4-fluoroethylene carbonate.

EXAMPLE 3

This example was carried out by the same method as the example 1 except adding 1 weight % of vinylethylene carbonate and 5 weight % of 4-fluoroethylene carbonate.

EXAMPLE 4

This example was carried out by the same method as the example 1 except adding 3 weight % of vinylethylene carbonate and 5 weight % of 4-fluoroethylene carbonate.

EXAMPLE 5

This example was carried out by the same method as the example 1 except adding 0.5weight % of vinylethylene carbonate and 10 weight % of 4-fluoroethylene carbonate.

COMPARATIVE EXAMPLE 1

This example was carried out by the same method as the example 1 except adding 3 weight % of vinylethylene carbonate and no 4-fluoroethylene carbonate.

COMPARATIVE EXAMPLE 2

This example was carried out by the same method as the example 1 except adding no vinylethylene carbonate and 3 weight % of 4-fluoroethylene carbonate.

COMPARATIVE EXAMPLE 3

This example was carried out by the same method as the example 1 except adding 4 weight % of vinylethylene carbonate and 6 weight % of 4-fluoroethylene carbonate.

COMPARATIVE EXAMPLE 4

This example was carried out by the same method as the example 1 except adding 5 weight % of vinylethylene carbonate and 5 weight % of 4-fluoroethylene carbonate.

COMPARATIVE EXAMPLE 5

This example was carried out by the same method as the example 1 except adding 0.5 weight % of vinylethylene carbonate and 15 weight % of 4-fluoroethylene carbonate.

COMPARATIVE EXAMPLE 6

This example was carried out by the same method as the example 1 except adding 0.05 weight % of vinylethylene carbonate and 20 weight % of 4-fluoroethylene carbonate.

Standard Capacity Test

A standard capacity of the batteries made according to the examples 1 to 5 and the comparative examples 1 to 6 was measured after charging with static current and static voltage of 0.5C/4.2V for 3 hours.

Life Test

The batteries according to the examples 1 to 5 and the comparative examples 1 to 6 was charged with static current and static voltage of 1C/4.2V for 3 hours at room temperature, and then discharged with static current of 1C/3.0V. Retention ratios (%) of the 300th cycle capacity after charging and discharging of 300th cycle were calculated. The results are illustrated in the following Table 1 and in the only figure.

$$\text{A retention ratio (\%) of the 300th cycle capacity} = (\text{300th cycle discharging capacity}/\text{1st cycle discharging capacity}) \times 100\ (\%)$$

Discharging Capacity Test at Low Temperature

The batteries made according to the examples 1 to 5 and the comparative examples 1 to 6 were charged with static current and static voltage of 0.5C/4.2V for 3 hours, and the battery discharge capacity was measured after storing at -20°C for 2 hours and discharging with static current of 1C/3V.

Increasing Rate Test of Battery Thickness at High Temperature

The batteries made according to the examples 1 to 5 and the comparative examples 1 to 6 were charged with static current and static voltage of 0.5C/4.2V for 3 hours, and stored at 60°C for 10 days. Then the increasing rate (%) of battery thickness was measured. The results are shown in the following Table 1.

Increasing rate of battery thickness (%) = ((final thickness - initial thickness) / initial thickness) × 100 (%)

Table 1

| | VEC (weight%) | FEC (weight%) | $300^{th}$charge/ discharge cycle | discharge capacity (-20°C) | Increasing rate of thickness at 60°C (%) |
|---|---|---|---|---|---|
| Example 1 | 0.5 | 3 | 82 | 30 | 6.4 |
| Example 2 | 1 | 3 | 86 | 25 | 5.1 |
| Example 3 | 1 | 5 | 88 | 20 | 7.3 |
| Example 4 | 3 | 5 | 88 | 15 | 4.8 |
| Example 5 | 0.5 | 10 | 86 | 28 | 20 |
| Comparative Example 1 | 3 | - | 68 | 0 | 4.1 |
| Comparative Example 2 | - | 3 | 77 | 30 | 24.0 |
| Comparative Example 3 | 4 | 6 | 80 | 5 | 10 |
| Comparative Example 4 | 5 | 5 | 87 | 2 | 8 |
| Comparative Example 5 | 0.5 | 15 | 86 | 26 | 35 |
| Comparative Example 6 | 0.05 | 20 | 84 | 28 | 37 |
| VEC: Vinyl Ethylene Carbonate, FEC: Fluoro Ethylene Carbonate | | | | | |

As shown in Table 1 above, when 0.1 to 3 weight % of vinylethylene carbonate and 0.1 to 10 weight % of 4-fluoroethylene carbonate was added, battery life, discharge property at low temperature, and storage property at high temperature have more superior properties than those of the comparative examples in case where vinylethylene carbonate or 4-fluoroethylene carbonate was not added, or more than 3 weight % of vinylethylene carbonate or more than 10 weight % of 4-fluoroethylene carbonate was added.

As the battery capacity according to charging/discharging at room temperature is shown in Table 1, the lithium rechargeable battery using the electrolyte, to which only 4-fluoroethylene carbonate or only vinylethylene carbonate was added, showed that the 300th charging/discharging cycle capacity was rapidly decreased. On the other hand, the lithium rechargeable battery using the electrolyte, to which both 4-fluoroethylene carbonate and vinylethylene carbonate are added, showed that it has more excellent capacity than that of the lithium rechargeable battery using the electrolyte, to which 4-fluoroethylene carbonate or vinylethylene carbonate respectively was added. The lithium rechargeable battery using the electrolyte, to which both 5 weight % of 4-fluoroethylene carbonate and 1 weight % of vinylethylene carbonate were added, showed the highest capacity.

When 0.1 to 10 weight % of 4-fluoroethylene carbonate, and 0.1 to 3 weight % of vinylethylene carbonate are added, the battery capacity has turned out to be more than 700 mAh even if the charging/discharging cycle is repeated several hundred times. The discharge capacity of the battery according to the embodiments of the present invention was improved, and an increasing rate of the battery thickness according to the increased internal pressure in the battery was reduced.

As shown in Comparative Example 4, the increasing rate of the battery thickness according to the increased internal pressure due to generate a gas in the battery at the high temperature was reduced, whereas the discharging capacity at the low temperature was substantially reduced.

As shown in Comparative Example 5, when 15 weight % of the 4-fluoroethylene carbonate was added and kept at the high temperature, it was verified that high temperature property was substantially reduced because the high increasing rate of the battery thickness.

As shown in Comparative Examples 1 to 6, the addition of vinylethylene carbonate or 4-fluoroethylene carbonate to the electrolyte may improve a certain item of battery performance, but the other items of battery performance may get worse.

However, according to an embodiment of the present invention, the battery life according to repeating charging/discharging cycle, and the storing property at the high temperature and discharging property at the low temperature are improved. In summary, the battery life and the storing property at a high temperature can be improved because the increasing rate of the battery thickness according to the increased internal pressure in the battery due to the gas generation is reduced when being kept at the high temperature. Further, the discharging property at a low temperature is increased.

## Claims

**1.** An electrolyte for a lithium rechargeable battery, comprising:

(i) an non-aqueous organic solvent;
(ii) a lithium salt;
(iii) a halogenated ethylene carbonate in the ranges of 0.1 to 10 weight % based on the total amount of the electrolyte; and
(iv) vinylethylene carbonate in the ranges of 0.1 to 3 weight % based on the total amount of the electrolyte.

**2.** The electrolyte for the lithium rechargeable battery of claim 1, wherein the halogenated ethylene carbonate is 4-fluoroethylene carbonate.

**3.** The electrolyte for the lithium rechargeable battery of claims 1 or 2, wherein the amount of halogenated ethylene carbonate is in the ranges of 2 to 6 weight % based on the total amount of the electrolyte.

**4.** The electrolyte for the lithium rechargeable battery of any of the preceding claims, wherein the amount of vinylethylene carbonate is in the ranges of 1 to 3 weight % based on the total amount of the electrolyte.

**5.** The electrolyte for the lithium rechargeable, battery of any of the preceding claims, wherein the electrolyte the non-aqueous organic solvent is selected from the group consisting of carbonates except halogenated ethylene carbonate and vinylethylene carbonate, esters, ethers, ketones and mixtures thereof.

**6.** The electrolyte for the lithium rechargeable battery of claim 5, wherein the non-aqueous organic solvent is a carbonate or a mixture of carbonates selected from the group consisting of dimethyl carbonate, diethyl carbonate, dipropyl carbonate, methylpropyl carbonate, ethylmethyl carbonate, ethylpropyl carbonate, ethylene carbonate, propylene carbonate, 1,2-butylene carbonate, 2,3-butylene carbonate, 1,2-pentylene carbonate and 2,3-pentylene carbonate.

**7.** The electrolyte for the lithium rechargeable battery of any of the preceding claims, wherein the lithium salt is selected from the group consisting of $LiPF_6$, $LiBF_4$, $LiSbF_6$, $LiAsF_6$, $LiClO_4$, $LiCF_3SO_3$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $LiAlO_4$, $LiAlCl_4$, LiCl and LiI.

**8.** The electrolyte for the lithium rechargeable battery of any of the preceding claims, wherein the amount of the halogenated ethylene carbonate is 5 weight % based on the total amount of the electrolyte, and the amount of the vinylethylene carbonate is 1 weight % based on the total amount of the electrolyte.

**9.** A lithium rechargeable battery comprising:

an anode including an anode active material that can intercalate and deintercalate Li ions reversibly;
a cathode including a cathode active material that can intercalate and deintercalate Li ions reversibly;
an electrolyte according to any of claims 1 to 8; and
a sealed case containing the electrolyte, the anode and the cathode.

## Patentansprüche

1. Ein Elektrolyt für eine wiederaufladbare Lithium-Batterie, umfassend:

   (i) ein nichtwässriges organisches Lösungsmittel;
   (ii) ein Lithiumsalz;
   (iii) ein halogeniertes Ethylencarbonat im Bereich zwischen 0,1 und 10 Gewichtsprozent bezüglich der Gesamtmenge des Elektrolyten; und
   (iv) Vinylethylencarbonat im Bereich zwischen 0,1 und 3 Gewichtsprozent bezüglich der Gesamtmenge des Elektrolyten.

2. Der Elektrolyt für die wiederaufladbare Lithium-Batterie nach Anspruch 1, wobei das halogenierte Ethylencarbonat 4-Fluorethylencarbonat ist.

3. Der Elektrolyt für die wiederaufladbare Lithium-Batterie nach Ansprüchen 1 oder 2, wobei die Menge an halogeniertem Ethylencarbonat im Bereich zwischen 2 und 6 Gewichtsprozent bezüglich der Gesamtmenge des Elektrolyten liegt.

4. Der Elektrolyt für die wiederaufladbare Lithium-Batterie nach irgendeinem der vorhergehenden Ansprüche, wobei die Menge an Vinylethylencarbonat im Bereich zwischen 1 und 3 Gewichtsprozent bezüglich der Gesamtmenge des Elektrolyten liegt.

5. Der Elektrolyt für die wiederaufladbare Lithium-Batterie nach irgendeinem der vorhergehenden Ansprüche, wobei der Elektrolyt das nichtwässrige Lösungsmittel aus der aus Carbonaten außer halogeniertem Ethylencarbonat und Vinylethylencarbonat, Estern, Ethern, Ketonen und Mischungen derselben bestehenden Gruppe ausgewählt ist.

6. Der Elektrolyt für die wiederaufladbare Lithium-Batterie nach Anspruch 5, wobei das nichtwässrige organische Lösungsmittel ein Carbonat oder eine Mischung von aus der aus Dimethylcarbonat, Diethylcarbonat, Dipropylcarbonat, Methylpropylcarbonat, Ethylmethylcarbonat, Ethylpropylcarbonat, Ethylencarbonat, Propylencarbonat, 1,2-Butylencarbonat, 2,3-Butylencarbonat, 1,2-Pentylencarbonat und 2,3-Pentylencarbonat bestehenden Gruppe ausgewählten Carbonaten ist.

7. Der Elektrolyt für die wiederaufladbare Lithium-Batterie nach irgendeinem der vorhergehenden Ansprüche, wobei das Lithiumsalz aus der aus $LiPF_6$, $LiBF_4$, $LiSbF_6$, $LiAsF_6$, $LiClO_4$, $LiCF_3SO_3$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $LiAlO_4$, $LiAlCl_4$, LiCl und LiI bestehenden Gruppe ausgewählt ist.

8. Der Elektrolyt für die wiederaufladbare Lithium-Batterie nach irgendeinem der vorhergehenden Ansprüche, wobei die Menge an halogeniertem Ethylencarbonat 5 Gewichtsprozent bezüglich der Gesamtmenge des Elektrolyten beträgt und die Menge an Vinylethylencarbonat 1 Gewichtsprozent bezüglich der Gesamtmenge des Elektrolyten beträgt.

9. Eine wiederaufladbare Lithium-Batterie, umfassend:

   eine Anode mit einem Anodenaktivmaterial, das in der Lage ist, Lithiumionen reversibel zu interkalieren und zu deinterkalieren;
   eine Kathode mit einem Kathodenaktivmaterial, das in der Lage ist, Lithiumionen reversibel zu interkalieren und zu deinterkalieren;
   einen Elektrolyten gemäß irgendeinem der Ansprüche 1 bis 8; und
   ein versiegeltes Gehäuse, das den Elektrolyten, die Anode und die Kathode enthält.

## Revendications

1. Electrolyte pour une pile rechargeable au lithium, comprenant :

   (i) un solvant organique non aqueux ;
   (ii) un sel de lithium ;
   (iii) un carbonate d'éthylène halogéné en une quantité comprise dans l'intervalle de 0,1 à 10 % en poids sur la

base de la quantité totale de l'électrolyte ; et
(iv) du carbonate de vinyléthylène en une quantité comprise dans l'intervalle de 0,1 à 3 % en poids sur la base de la quantité totale de l'électrolyte.

2. Electrolyte pour pile rechargeable au lithium suivant la revendication 1, dans lequel le carbonate d'éthylène halogéné est le carbonate de 4-fluoréthylène.

3. Electrolyte pour pile rechargeable au lithium suivant la revendication 1 ou 2, dans lequel la quantité de carbonate d'éthylène halogéné est comprise dans l'intervalle de 2 à 6 % en poids sur la base de la quantité totale de l'électrolyte.

4. Electrolyte pour pile rechargeable au lithium suivant l'une quelconque des revendications précédentes, dans lequel la quantité de carbonate de vinyléthylène est comprise dans l'intervalle de 1 à 3 % en poids sur la base de la quantité totale de l'électrolyte.

5. Electrolyte pour pile rechargeable au lithium suivant l'une quelconque des revendications précédentes, électrolyte dans lequel le solvant organique non aqueux est choisi dans le groupe consistant en des carbonates à l'exception du carbonate d'éthylène halogéné et du carbonate de vinyléthylène, des esters, des éthers, des cétones et de leurs mélanges.

6. Electrolyte pour pile rechargeable au lithium suivant la revendication 5, dans lequel le solvant organique non aqueux est un carbonate ou un mélange de carbonates choisis dans le groupe consistant en le carbonate de diméthyle, le carbonate de diéthyle, le carbonate de dipropyle, le carbonate de méthylpropyle, le carbonate d'éthylméthyle, le carbonate d'éthylpropyle, le carbonate d'éthylène, le carbonate de propylène, le carbonate de 1,2-butylène, le carbonate de 2,3-butylène, le carbonate de 1,2-pentylène et le carbonate de 2,3-pentylène.

7. Electrolyte pour pile rechargeable au lithium suivant l'une quelconque des revendications précédentes, dans lequel le sel de lithium est choisi dans le groupe consistant en $LiPF_6$, $LiBF_4$, $LiSbF_6$, $LiAsF_6$, $LiClO_4$, $LiCF_3SO_3$, $LiN(SO_2CF_3)_2$, $LiN(SO_2C_2F_5)_2$, $LiC(SO_2CF_3)_3$, $LiN(SO_3CF_3)_2$, $LiC_4F_9SO_3$, $LiAlO_4$, $LiAlCl_4$, LiCl et LiI.

8. Electrolyte pour pile rechargeable au lithium suivant l'une quelconque des revendications précédentes, dans laquelle la quantité du carbonate d'éthylène halogéné est égal à 5 % en poids sur la base de la quantité totale de l'électrolyte, et la quantité du carbonate de vinyléthylène est égale à 1 % en poids sur la base de la quantité totale de l'électrolyte.

9. Electrolyte pour pile rechargeable au lithium, comprenant :

une anode comprenant une matière active d'anode qui peut effectuer de manière réversible l'intercalation et la désintercalation des ions Li ;
une cathode comprenant une matière active de cathode qui peut effectuer de manière réversible l'intercalation et la désintercalation des ions Li ;
un électrolyte suivant l'une quelconque des revendications 1 à 8 ; et
un boîtier clos hermétiquement, contenant l'électrolyte, l'anode et la cathode.

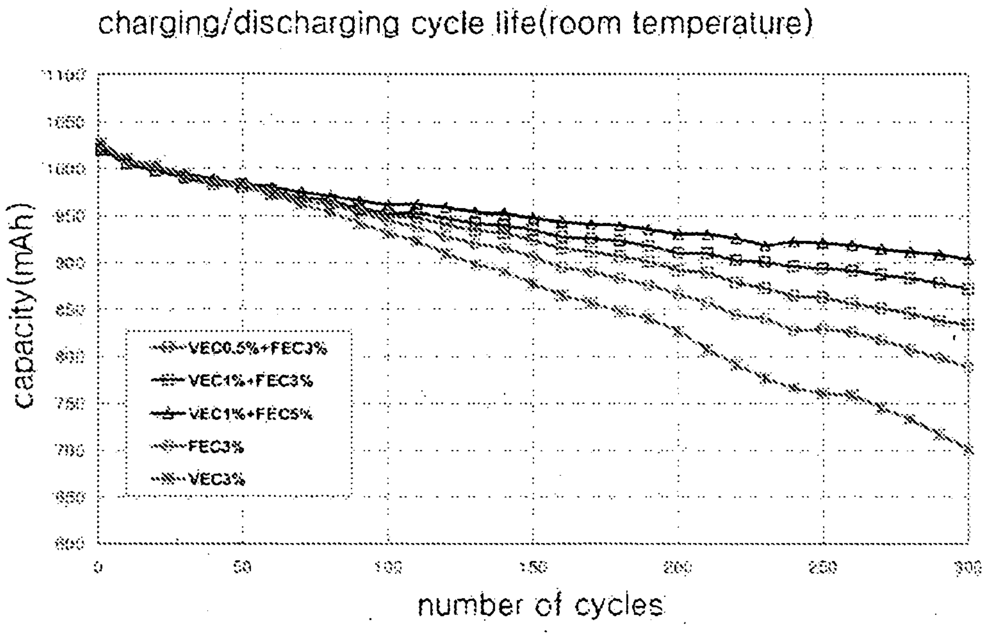
charging/discharging cycle life(room temperature)
capacity(mAh)
number of cycles
VEC0.5%+FEC3%
VEC1%+FEC3%
VEC1%+FEC5%
FEC3%
VEC3%